# EUROPEAN PATENT APPLICATION

(11) **EP 4 447 511 A1**
(43) Date of publication of application: **16.10.2024**
(21) Application number: 23745905.2
(22) Date of filing: 09.01.2023
(51) Int. Cl.: H04W 12/033

(54) **METHOD AND APPARATUS FOR DATA PROCESSING IN RANDOM ACCESS PROCESS**

(30) Priority: 25.01.2022 CN 202210090208
(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN); WANG, Yang, Shenzhen, Guangdong 518129 (CN)
(74) Representative: Pfenning, Meinig & Partner mbB
(86) International application number: PCT/CN2023/071372
(87) International publication number: WO 2023/143022

(57) **Abstract**

This application provides a method for processing data that is in a random access procedure. The method includes: A terminal device sends a first message to an access network device, where the first message includes a first public key of the terminal device, and the first public key is used by the access network device to encrypt a second message that is sent to the terminal device and that is in the random access procedure; and the terminal device receives the second message sent by the access network device. The first public key is a public key in a first public-private key pair of the terminal device, the first public-private key pair further includes a first private key, and the first private key is stored in the terminal device to decrypt the second message. The terminal device sends the first public key of the terminal device to the access network device, so that the access network device can encrypt the second message that is sent to the terminal device and that is in the random access procedure. In this way, network security performance is improved.

## Description

This application claims priority to Chinese Patent Application No. 202210090208.1, filed with the China National Intellectual Property Administration on January 25, 2022 and entitled "METHOD FOR PROCESSING DATA THAT IS IN RANDOM ACCESS PROCESS, AND APPARATUS", which is incorporated herein by reference in its entirety.

### TECHNICAL FIELD

This application relates to the communication field, and specifically, to a method for processing data that is in a random access procedure, and an apparatus.

### BACKGROUND

In terms of network security, tasks of a network include performing identity authentication and authorization on a terminal device that accesses the network, so that the terminal device accesses an operator network, and further air interface encryption of service communication of the terminal device is started. Random access is a step in a process in which the terminal device is connected to the network, and a random access procedure occurs before the identity authentication and authorization of the terminal device. Currently, all messages sent in the random access procedure are plaintexts. Consequently, all messages of the terminal device before security authentication are easily eavesdropped by an attacker, and a network security risk is increased.

### SUMMARY

This application provides a method for processing data that is in a random access procedure, and an apparatus. According to the method, a message in the random access procedure is encrypted, so that an attacker cannot eavesdrop on the message in the random access procedure. In this way, network security performance is improved.

According to a first aspect, a method for processing data that is in a random access procedure is provided. The method includes: A terminal device sends a first message to an access network device, where the first message includes a first public key of the terminal device, and the first public key is used by the access network device to encrypt a second message that is sent to the terminal device and that is in the random access procedure; and the terminal device receives the second message sent by the access network device. The first public key is a public key in a first public-private key pair of the terminal device, the first public-private key pair further includes a first private key, and the first private key is stored in the terminal device to decrypt the second message.

According to the method provided in this embodiment of this application, the terminal device sends the first public key of the terminal device to the access network device, so that the access network device can encrypt the second message that is sent to the terminal device and that is in the random access procedure. Therefore, an attacker cannot eavesdrop on a message in the random access procedure, and network security performance is improved.

With reference to the first aspect, in some implementations of the first aspect, the first message further includes third information and first indication information that are in the random access procedure of the terminal device, and the first indication information indicates that the third information includes encrypted information. Before that a terminal device sends a first message to an access network device, the terminal device encrypts a part or all of the Msg3 by using a second public key, where the second public key is generated by using an identifier of the access network device and a global public key. The identifier of the access network device is from a broadcast message sent by the access network device, and the global public key is a public key in a second public-private key pair determined by a third-party private key generator, the second public-private key pair further includes a second private key, and the second private key is stored in the access network device to decrypt the encrypted information in the third information.

With reference to the first aspect, in some implementations of the first aspect, the first message further includes third information and second indication information that are in the random access procedure of the terminal device, and the second indication information indicates that the third information is plaintext information.

With reference to the first aspect, in some implementations of the first aspect, the first public-private key pair is preset in a universal subscriber identity module USIM of the terminal device, or the first public-private key pair is generated by the terminal device.

With reference to the first aspect, in some implementations of the first aspect, the terminal device sends a third message to the access network device, where the third message is any message sent by the terminal device before security authentication on the terminal device is completed, and the third message is encrypted by using an encryption key generated by using identification information and the first private key of the terminal device. The terminal device receives a fourth message sent by the access network device, where the fourth message is any message sent by the access network device before the security authentication on the terminal device is completed, and the fourth message is encrypted by using an encryption key generated by using the identification information and the first public key of the terminal device. The terminal device decrypts the fourth message based on the first private key.

With reference to the first aspect, in some implementations of the first aspect, before that a terminal device sends a first message to an access network device, the terminal device receives third indication information sent by a core network device, where the third indication information indicates a security level of a service of the terminal device, and the security level includes a high security level. The terminal device initiates a service with the high security level to trigger the random access procedure.

According to a second aspect, a method for processing data that is in a random access procedure is provided. The method includes: An access network device receives a first message from a terminal device, where the first message includes a first public key of the terminal device; and the access network device sends a second message in the random access procedure of the terminal device to the terminal device, where the second message is encrypted by using the first public key. The first public key is a public key in a first public-private key pair of the terminal device, the first public-private key pair further includes a first private key, and the first private key is stored in the terminal device to decrypt the second message.

According to the method provided in this embodiment of this application, the access network device encrypts the second message that is sent to the terminal device and that is in the random access procedure of the terminal device. A key used to encrypt the second message includes the first public key that is sent by the terminal device and that is of the terminal device. Therefore, an attacker cannot eavesdrop on a message in the random access procedure, and network security performance is improved.

With reference to the second aspect, in some implementations of the second aspect, the first message further includes third information and first indication information that are in the random access procedure of the terminal device, and the first indication information indicates that the third information includes encrypted information. After that an access network device receives a first message from a terminal device, the access network device determines, based on the first indication information, that the third information includes the encrypted information. The access network device decrypts the third information by using a second private key, where the second private key is a private key in a second public-private key pair determined by a third-party private key generator, the second public-private key pair further includes a second public key, the second public key is preset in the terminal device, and the second public key is used by the terminal device to encrypt a part or all of the third information.

With reference to the second aspect, in some implementations of the second aspect, the first message further includes third information and second indication information that are in the random access procedure of the terminal device, and the second indication information indicates that the third information is plaintext information.

With reference to the second aspect, in some implementations of the second aspect, the first public-private key pair is preset in a universal subscriber identity module USIM of the terminal device, or the first public-private key pair is generated by the terminal device.

With reference to the second aspect, in some implementations of the second aspect, the access network device receives a third message sent by the terminal device, where the third message is any message sent by the terminal device before security authentication on the terminal device is completed, and the third message is encrypted by using an encryption key generated by using identification information and the first private key of the terminal device. The access network device decrypts the third message based on the first public key. The access network device sends a fourth message to the terminal device, where the fourth message is any message sent by the access network device before the security authentication on the terminal device is completed, and the fourth message is encrypted by using an encryption key generated by using the identification information and the first public key of the terminal device.

According to a third aspect, an apparatus for processing data that is in a random access procedure is provided. The apparatus includes: a transceiver unit, configured to send a first message to an access network device, where the first message includes a first public key of the apparatus, and the first public key is used by the access network device to encrypt a second message that is sent to the apparatus and that is in the random access procedure, where the transceiver unit is further configured to receive the second message sent by the access network device; and a processing unit, configured to decrypt the second message by using a first private key, where the first public key and the first private key are a public key and a private key in a first public-private key pair of the apparatus, and the first private key is stored in the apparatus.

With reference to the third aspect, in some implementations of the third aspect, the first message further includes third information and first indication information that are in the random access procedure of the apparatus, and the first indication information indicates that the third information includes encrypted information. The processing unit is further configured to encrypt a part or all of the third information by using a second public key, where the second public key is generated by using an identifier of the access network device and a global public key. The identifier of the access network device is from a broadcast message sent by the access network device, the global public key is a public key in a second public-private key pair determined by a third-party private key generator, the second public-private key pair further includes a second private key, and the second private key is stored in the access network device to decrypt the encrypted information in the third information.

With reference to the third aspect, in some implementations of the third aspect, the first message further includes third information and second indication information that are in the random access procedure of the apparatus, and the second indication information indicates that the third information is plaintext information.

With reference to the third aspect, in some implementations of the third aspect, the first public-private key pair is preset in a universal subscriber identity module USIM of the apparatus, or the first public-private key pair is generated by the processing unit.

With reference to the third aspect, in some implementations of the third aspect, the transceiver unit is further configured to send a third message to the access network device, where the third message is any message sent by the apparatus before security authentication on the apparatus is completed, and the third message is encrypted by using an encryption key generated by using identification information and the first private key of the apparatus. The transceiver unit is further configured to receive a fourth message sent by the access network device, where the fourth message is any message sent by the access network device before the security authentication on the apparatus is completed, and the fourth message is encrypted by using an encryption key generated by using the identification information and the first public key of the apparatus. The processing unit is further configured to decrypt the fourth message based on the first private key.

With reference to the third aspect, in some implementations of the third aspect, the transceiver unit is further configured to receive third indication information sent by a core network device, where the third indication information indicates a security level of a service of the apparatus, and the security level includes a high security level. The apparatus initiates a service with the high security level to trigger the random access procedure.

According to a fourth aspect, an apparatus for processing data that is in a random access procedure is provided. The apparatus includes: a transceiver unit, configured to receive a first message from a terminal device, where the first message includes a first public key of the terminal device, where the transceiver unit is further configured to send a second message in the random access procedure of the terminal device to the terminal device, and the second message is encrypted by using the first public key. The first public key is a public key in a first public-private key pair of the terminal device, the first public-private key pair further includes a first private key, and the first private key is stored in the terminal device to decrypt the second message.

With reference to the fourth aspect, in some implementations of the fourth aspect, the first message further includes third information and first indication information that are in the random access procedure of the terminal device, and the first indication information indicates that the third information includes encrypted information. The transceiver unit further includes a processing unit, where the processing unit is configured to determine, based on the first indication information, that the Msg3 includes the encrypted information, and the processing unit is further configured to decrypt the third information by using a second private key, where the second private key is a private key in a second public-private key pair determined by a third-party private key generator, the second public-private key pair further includes a second public key, the second public key is preset in the terminal device, and the second public key is used by the terminal device to encrypt a part or all of the third information.

With reference to the fourth aspect, in some implementations of the fourth aspect, the first message further includes third information and second indication information that are in the random access procedure of the terminal device, and the second indication information indicates that the third information is plaintext information.

With reference to the fourth aspect, in some implementations of the fourth aspect, the first public-private key pair is preset in a universal subscriber identity module USIM of the terminal device, or the first public-private key pair is generated by the terminal device.

With reference to the fourth aspect, in some implementations of the fourth aspect, the transceiver unit is further configured to receive a third message sent by the terminal device, where the third message is any message sent by the terminal device before security authentication on the terminal device is completed, and the third message is encrypted by using an encryption key generated by using identification information and the first private key of the terminal device. The processing unit is further configured to decrypt the third message based on the first public key. The transceiver unit is further configured to send a fourth message to the terminal device, where the fourth message is any message sent by the apparatus before the security authentication on the terminal device is completed, and the fourth message is encrypted by using an encryption key generated by using the identification information and the first public key of the terminal device.

According to a fifth aspect, a communication apparatus is provided. The communication apparatus includes a processor. The processor is coupled to a memory, and may be configured to execute instructions in the memory, to implement functions of a terminal device in any one of the first aspect or the possible implementations of the first aspect. Optionally, the apparatus further includes the memory. Optionally, the apparatus further includes a communication interface, and the processor is coupled to the communication interface.

In an implementation, the apparatus is a terminal device. When the apparatus is a terminal device, the communication interface may be a transceiver or an input/output interface.

In another implementation, the apparatus is a chip disposed in a terminal device. When the apparatus is a chip disposed in a terminal device, the communication interface may be an input/output interface.

Optionally, the transceiver may be a transceiver circuit. Optionally, the input/output interface may be an input/output circuit.

According to a sixth aspect, a communication apparatus is provided. The communication apparatus includes a processor. The processor is coupled to a memory, and may be configured to execute instructions in the memory, to implement functions of an access network device in any one of the second aspect or the possible implementations of the second aspect. Optionally, the apparatus further includes the memory. Optionally, the apparatus further includes a communication interface, and the processor is coupled to the communication interface.

In an implementation, the apparatus is an access network device. When the apparatus is an access network device, the communication interface may be a transceiver or an input/output interface.

In another implementation, the apparatus is a chip disposed in an access network device. When the apparatus is a chip disposed in an access network device, the communication interface may be an input/output interface.

Optionally, the transceiver may be a transceiver circuit. Optionally, the input/output interface may be an input/output circuit.

According to a seventh aspect, a processor is provided. The processor includes an input circuit, an output circuit, and a processing circuit. The processing circuit is configured to receive a signal by using the input circuit, and transmit a signal by using the output circuit, to enable the processor performs the method according to any one of the first aspect and the second aspect or the possible implementations of the first aspect and the second aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to an eighth aspect, an apparatus is provided. The apparatus includes a processor and a memory. The processor is configured to read instructions stored in the memory, receive a signal via a receiver, and transmit a signal via a transmitter, to perform the method according to any one of the first aspect and the second aspect or the possible implementations of the first aspect and the second aspect.

Optionally, there are one or more processors and one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be respectively disposed on different chips. A type of the memory and a manner of disposing the memory and the processor are not limited in this embodiment of this application.

It should be understood that a related data exchange process, for example, sending of indication information may be a process of outputting the indication information from the processor, and receiving of capability information may be a process of receiving input capability information by the processor. Specifically, data output by the processor may be output to the transmitter, and input data received by the processor may be from the receiver. The transmitter and the receiver may be collectively referred to as a transceiver.

The apparatus in the eighth aspect may be a chip, and the processor may be implemented by using hardware or by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be independently located outside the processor.

According to a ninth aspect, a computer program product is provided. The computer program product includes a computer program (also referred to as code or instructions). When the computer program is run, a computer is enabled to perform the method according to any one of the first aspect and the second aspect or the possible implementations of the first aspect and the second aspect.

According to a tenth aspect, a computer-readable medium is provided. The computer-readable medium stores a computer program (also referred to as code or instructions). When the computer program is run on a computer, the computer is enabled to perform the method according to any one of the first aspect and the second aspect or the possible implementations of the first aspect and the second aspect.

According to an eleventh aspect, a chip system is provided. The chip system includes a processor, the processor is configured to invoke a computer program from a memory and run the computer program, to enable a device on which the chip system is installed performs the method according to any one of the first aspect and the second aspect or the possible implementations of the first aspect and the second aspect.

### BRIEF DESCRIPTION OF DRAWINGS

FIG. 1 is a diagram of a system architecture to which an embodiment of this application is applicable;
FIG. 2 is a schematic flowchart of a four-step random access procedure according to this application;
FIG. 3 is a schematic flowchart of a two-step random access procedure according to this application;
FIG. 4 is a schematic flowchart of a method for processing data that is in a random access procedure according to this application;
FIG. 5 is a schematic of a communication apparatus according to an embodiment of this application;
FIG. 6 is a block diagram of a communication apparatus according to another embodiment of this application; and
FIG. 7 is a diagram of a chip system according to an embodiment of this application.

### DESCRIPTION OF EMBODIMENTS

The following describes technical solutions in this application with reference to the accompanying drawings.
A wireless communication system mentioned in embodiments of this application includes but is not limited to a global system for mobile communications (global system of mobile communication, GSM), a long term evolution (long term evolution, LTE) frequency division duplex (frequency division duplex, FDD) system, LTE time division duplex (time division duplex, TDD), an LTE system, a long time evolution-advanced (LTE-Advanced, LTE-A) system, a next-generation communication system (for example, a 6G communication system), a converged system of a plurality of access systems, or an evolved system.

The technical solutions provided in this application may be further applied to machine type communication (machine type communication, MTC), a long term evolution-machine (Long Term Evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle-to-X (vehicle-to-X, V2X where X may represent anything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

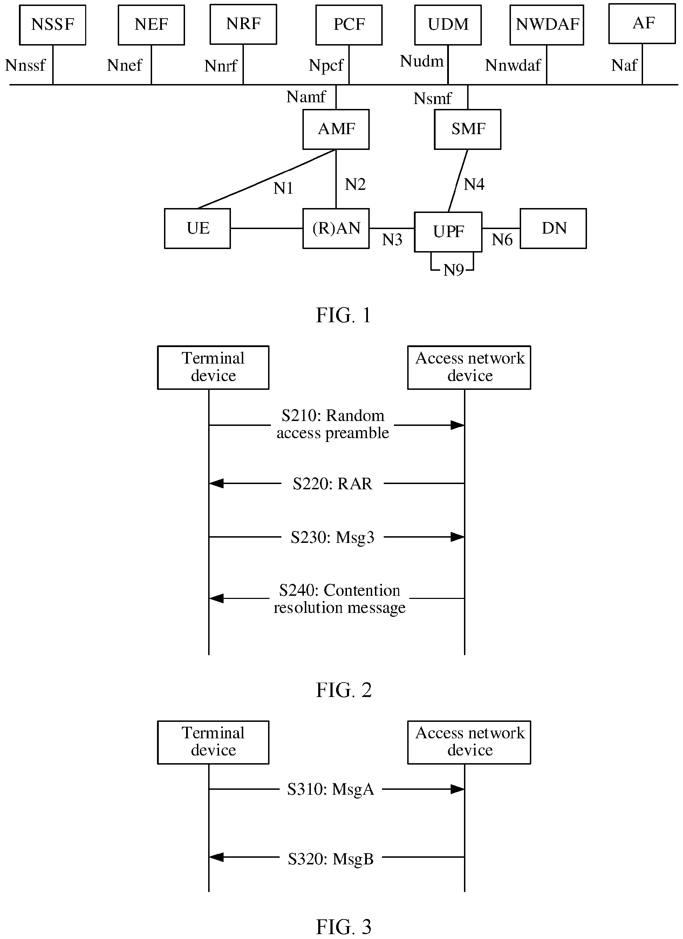

FIG. 1 is a block diagram of a communication system architecture to which this application is applicable. As shown in the figure, the system architecture may specifically include the following network elements.
1. User equipment (user equipment, UE): The user equipment may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device having a wireless connection function. Currently, some examples of the terminal may be: a mobile phone (mobile phone), a tablet computer (pad), a computer having a wireless transceiver function (for example, a notebook computer or a palmtop computer), a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, a terminal device in a future evolved public land mobile network (public land mobile network, PLMN), or the like.

In addition, the terminal device may alternatively be a terminal device in an internet of things (Internet of things, IoT) system. An IoT is an important part in future development of information technologies. A main technical feature of the IoT is to connect things to a network by using a communication technology, to implement an intelligent network for interconnection between a person and a machine or between things. An IoT technology can achieve massive connections, intensive coverage, and power saving for terminals by using, for example, a narrow band (narrow band, NB) technology.

In addition, the terminal device may further include a sensor such as an intelligent printer, a train detector, or a gas station. Main functions of the terminal device include collecting data (which is a function of some terminal devices), receiving control information and downlink data from a network device, sending an electromagnetic wave, and transmitting uplink data to the network device.

It should be understood that the terminal device may be any device that can access a network. The terminal device may communicate with an access network device by using an air interface technology.

2. (Radio) access network ((radio) access network, (R)AN): An access network that implements a network access function based on a wireless communication technology may be referred to as a radio access network. The radio access network can manage radio resources, provide an access service for a terminal, and further complete forwarding of a control signal and user data between the terminal and a core network.

A radio access network device in this application may be a device having a wireless transceiver function. The radio access network device may be a device that provides a wireless communication function service, is usually located on a network side, and includes but is not limited to a next-generation NodeB (gNodeB, gNB) in a 5th generation (5th generation, 5G) communication system, a next-generation base station in a 6th generation (6th generation, 6G) mobile communication system, a base station in a future mobile communication system, an access node in a Wi-Fi system, an evolved NodeB (evolved node B, eNB) in an LTE system, a radio network controller (radio network controller, RNC), a NodeB (node B, NB), a base station controller (base station controller, BSC), a home base station (for example, a home evolved NodeB or a home NodeB, HNB), a baseband unit (baseband unit, BBU), a transmission reception point (transmission reception point, TRP), a transmitting point (transmitting point, TP), a base transceiver station (base transceiver station, BTS), or the like. In a network structure, the access network device may include a central unit (centralized unit, CU) node, a distributed unit (distributed unit, DU) node, a RAN device including a CU node and a DU node, or a RAN device including a control plane CU node, a user plane CU node, and a DU node. The access network device provides a service for a cell. The user equipment communicates with a base station by using a transmission resource (for example, a frequency domain resource, namely, a frequency spectrum resource) used for the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells have features of a small coverage area and low transmit power, and are applicable to providing a high-rate data transmission service. The radio access network device may be a macro base station, may be a micro base station or an indoor base station, or may be a relay node or a donor node, a device that provides a wireless communication service for the user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the radio access network device are not limited in embodiments of this application.

3. Access and mobility management function network element (access and mobility management function, AMF): The access and mobility management function network element is mainly used for mobility management, access management, and the like, for example, user location update, registration of a user with a network, user handover, and the like. The AMF may be further configured to implement a function other than session management in functions of a mobility management entity (mobility management entity, MME), for example, functions such as access authorization (or authentication).

4. Session management function network element (session management function, SMF): The session management function network element is mainly used for session management, internet protocol (Internet Protocol, IP) address allocation and management of the UE, selection of an endpoint that can manage a user plane function, policy control or charging function interface, downlink data notification, and the like.

5. User plane function network element (user plane function, UPF): The user plane function network element may be used for packet routing and forwarding, quality of service (quality of service, QoS) processing of user plane data, or the like. User data may be accessed to a data network (data network, DN) via the network element.

6. Data network (data network, DN): The data network is a network used to transmit or receive data.

7. Policy control function network element (policy control function, PCF): The policy control function network element is a unified policy framework used for guiding network behavior, and provides policy rule information and the like for a control plane function network element (for example, the AMF and the SMF network elements).

8. UDM network element: The UDM network element is configured to generate an authentication credential, process a subscriber identifier (for example, store and manage a subscriber permanent identifier), control access authorization, manage subscription data, and the like.

9. Application function network element (application function, AF): The application function network element is configured to perform application-affected data routing, access a network exposure function network element, interact with a policy framework to perform policy control, and the like.

In addition, the network architecture further includes: a network slice selection function network element (network slice selection function, NSSF), configured to manage network slice-related information; and a network repository function network element (network repository function, NRF), configured to store description information of a network functional entity and a service provided by the network functional entity, and support service discovery, network element entity discovery, and other functions.

In the network architecture shown in FIG. 1, network elements may communicate with each other by using interfaces shown in the figure, and some interfaces may be implemented in a manner of service-based interfaces. As shown in the figure, the UE and the AMF may interact with each other by using an N1 interface. An interaction message may be referred to as, for example, an N1 message (N1 Message). The RAN and the AMF may interact with each other by using an N2 interface. The N2 interface may be used to send a non-access stratum (non-access stratum, NAS) message and the like. The RAN and the UPF may interact with each other by using an N3 interface. The N3 interface may be used to transmit or receive the user plane data and the like. The SMF and the UPF may interact with each other by using an N4 interface. The N4 interface may be used to transmit or receive information such as tunnel identification information of an N3 connection, data buffering indication information, and a downlink data notification message. The UPF and the DN may interact with each other by using an N6 interface. The N6 interface may be used to transmit or receive the user plane data and the like. Relationships between other interfaces and the network elements are shown in FIG. 1. For brevity, details are not described herein.

It should be understood that the network architecture applied to embodiments of this application is merely an example of a network architecture described from a perspective of a conventional point-to-point architecture and a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the network slice selection function network element (network slice selection function, NSSF), an NEF, an AUSF, the NRF, the PCF, and the UDM shown in FIG. 1 may be understood as network elements configured to implement different functions in the core network, for example, may be combined into a network slice based on requirements. The core network elements may be independent devices, or may be integrated into a same device to implement different functions. Specific forms of the foregoing network elements are not limited in this application.

It should be further understood that the foregoing names are defined merely for ease of distinguishing between different functions, and should not constitute any limitation on this application. This application does not exclude a possibility of using another name in the 5G network and another future network. For example, in a 6G network, some or all of the foregoing network elements may still use terms in 5G, or may use other names or the like. Names of the interfaces between the network elements in FIG. 1 are merely examples. During specific implementation, the names of the interfaces may be other names. This is not specifically limited in this application. In addition, names of messages (or signaling) transmitted or received between the foregoing network elements are merely examples, and do not constitute any limitation on functions of the messages.

FIG. 1 is the block diagram of the communication system architecture to which embodiments of this application is applicable. For ease of understanding the technical solutions in embodiments of this application, before the solutions in embodiments of this application are described based on the architecture, some terms or concepts that may be used in embodiments of this application are first briefly described.

### 1. Universal subscriber identity module (UMTS subscriber identify module, USIM) card

The USIM card is a module used for subscriber identity identification in a universal mobile telecommunications system (universal mobile telecommunications system, UTMS). The USIM card may store subscriber information, a phone number, and certification information, and provide storage space for a short message. AUSIM may include an international mobile subscriber identification number (international mobile subscriber identification number, IMSI), a subscription permanent identifier (subscription permanent identifier, SUPI), a public key (public key), and the like. The USIM card is usually considered as an upgrade of a subscriber identity module (subscriber identify module, SIM) card. The USIM card needs to be used in an LTE network, and the USIM card is compatible with a 2nd generation (2nd generation, 2G) network and a 3rd generation (3rd generation) network.

### 2. Key

The key is a parameter input in an algorithm for converting a plaintext into a ciphertext or converting a ciphertext into a plaintext.

### 3. Public key and private key

The public key and the private key are one key pair (to be specific, one public key and one private key) obtained by using an algorithm. In the key pair, one key is publicly available and is referred to as a public key, and the other key is reserved by its owner and is referred to as a private key. It can be ensured that the key pair obtained by using the algorithm is globally unique. When the key pair is used, if a piece of data is encrypted with either the public or the private key and then needs to be decrypted with the other key. For example, if data is encrypted with the public key, the data needs to be decrypted with the private key. If data is encrypted with the private key, the data needs to be decrypted with the public key. Otherwise, decryption will fail.

### 4. Signature

The signature in embodiments of this application may be understood as a digital signature (or referred to as a public key digital signature). The digital signature is a digital string that is generated only by an information sender and cannot be forged by others. The digital string is also a valid proof for authenticity of information sent by the information sender. Similar to a common physical signature written on a paper, the digital signature is implemented by using a technology in the field of public key encryption, and is used to authenticate digital information. A set of digital signatures usually defines two complementary operations, where one is used for signing, and the other is used for verification. The digital signature is application of an asymmetric cryptographic technology and a digital digest technology.

### 5. Identity-based cryptography (identity-based cryptography, IBC)

The IBC is an asymmetric cryptographic technology, and is used to provide a signature based on identification information (identification, ID). The IBC cryptographic technology is a public key technology. A key is generated based on a pair of global parameters: a global public key (global public key, GPK) and a global secret key (global secret key, GSK). A private key generator (private key generator, PKG) performs, based on ID information provided by a user (for example, an access network device), an operation by using the global parameters, to generate a related ID-based private key SK_{ID} for the user. Further, the ID, the SK_{ID}, and the GPK are distributed to the user in a reliable manner. When performing signing by using the IBC technology, a message sender (for example, the access network device) needs to have an ID, a private key SK_{ID} used for signing, and a global public key GPK. The message sender signs plaintext data M (for example, a broadcast message sent by the access network device) by using the ID, the global public key GPK, and the private key SK, to form a signature Sig (SK_{ID}, M), and sends a signed message E(M) = {ID, M, Sig (SK_{ID}, M)} to a receiver (for example, a terminal device). After receiving the ciphertext E(M), the receiver may obtain the corresponding global public key GPK based on the ID of the access network device carried in the message, or the receiver may preset the global public key GPK. Further, the receiver verifies, by using the ID of the access network device and the GPK, the signature Sig (SK_{ID}, M) carried in the received message, to verify integrity of the message.

### 6. Random access (random access, RA) procedure

The random access procedure is a procedure from a moment at which a terminal device sends a random access preamble (preamble) to attempt to access a network to a moment at which a basic signaling connection is established between the terminal device and the network.

It should be noted that before selecting a random access channel occasion (RACH occasion, RO) for sending the preamble, the terminal device needs to select an uplink carrier. For example, when a supplementary uplink (supplementary uplink, SUL) or a normal uplink (normal uplink, NUL) is configured, the terminal device may choose to work on the SUL or on the NUL.

After selecting the uplink carrier, the terminal device (for example, a terminal device in an RRC connected state) may need to perform an operation on a bandwidth part (BWP). For example, when no RO is configured on an active uplink BWP of the terminal device, the terminal device needs to switch from the active uplink BWP to an initial uplink BWP.

After selecting the uplink carrier or performing the operation on the BWP, the terminal device needs to select a random access (random access, RA) type. The RA type may include, for example, two-step random access (as shown in FIG. 3) and four-step random access (as shown in FIG. 2).

Further, after determining the RA type, the terminal device needs to select a RACH resource. The terminal device may select, based on a selected synchronization signal and PBCH block (Synchronization Signal and PBCH block, SSB) and a mapping relationship between the SSB and the RO, the RO for sending the preamble. Alternatively, the terminal device may select the to-be-sent preamble based on a selected SSB and a mapping relationship between the SSB and the preamble.

For example, one SSB may correspond to a plurality of ROs, or a plurality of SSBs are mapped to one RO. For another example, one SSB corresponds to one or more preambles, and different SSBs may use different preambles.

As described above, the RA type may include the two-step random access and the four-step random access. For ease of understanding, a four-step random access procedure and a two-step random access procedure are described respectively with reference to FIG. 2 and FIG. 3.

FIG. 2 is a schematic flowchart of a four-step random access procedure. The four-step random access procedure may include the following steps.

S201: An access network device sends a synchronization signal, system information, and/or random access configuration information to a terminal device.

Before the four-step random access procedure, the access network device sends the synchronization signal and the system information at a specific location in a broadcast manner. In NR, the synchronization signal sent by the access network device is referred to as a synchronization signal/physical broadcast channel block (synchronization signal/physical broadcast channel block, SSB) (or represented as an SS/PBCH block). The SSB and the system information are periodically sent by the access network device based on a configuration.

Optionally, the access network device may further send the random access configuration information to the terminal device, so that the terminal device determines information such as an index, a time-frequency resource, and a power configuration of a random access preamble (random access preamble).

S210: The terminal device sends a random access request to the access network device, where the random access request may also be referred to as a message 1 (message 1, Msg1), and includes the random access preamble (preamble).

After the terminal device is powered on or when the terminal device needs to re-access a network, the terminal device performs detection on the synchronization signal of the access network device, performs downlink time and frequency synchronization, and receives configuration information related to a random access resource (the random access configuration information) in the system information.

The terminal device selects, based on the random access configuration information and a synchronized SSB, a random access resource associated with the SSB. The resource includes a time resource, a frequency resource, and a code domain resource (a random access preamble preamble). The terminal device sends a random access signal, namely, a random access preamble (preamble or sequence), by using the random access resource. The random access signal is carried on a physical random access channel (physical random access channel, PRACH).

The random access preamble may be a preamble in a group A or a group B. The group A and the group B are two different random access preamble groups. The terminal device may select (or the access network device specifies) a preamble in one of the random access preamble groups, and the terminal device may send the preamble. Preamble grouping is to add specific prior information, so that the access network device allocates an appropriate uplink resource to an Msg3 in a RAR. For example, if the terminal device estimates that a subsequent Msg3 may be large during access, the preamble in the group B may be used. Otherwise, the preamble in the group A is used. In this way, the access network device can know, based on the received preamble, a group to which the preamble belongs, and then can know an approximate resource requirement of the Msg3.

S220: The access network device sends the RAR to the terminal device.

After receiving the random access preamble sent by the terminal device, the access network device sends the random access response (random access response, RAR), also referred to as a message 2 (message 2, Msg2), to the terminal device based on the random access preamble. For example, the Msg2 sent by the access network device to the terminal device may further include indication information indicating an uplink resource for sending the message 3 (message 3, Msg3). It may be understood as that after receiving the Msg2, the terminal device can learn of the uplink resource for sending the Msg3.

S230: The terminal device sends the Msg3 to the access network device.

After receiving the Msg2, the terminal device sends the Msg3 to the access network device based on the Msg2. For example, the Msg3 may include layer 2 (layer 2, L2) information and/or layer 3 (layer 3, L3) information, for example, an RRC connection setup request message. The Msg3 includes an identifier of the terminal device. The identifier of the terminal device is used for contention resolution in S240. The identifier of the terminal device may be related to a status of the terminal device in a communication system. For example, when the terminal device is in an RRC connected (RRC_CONNECTED) state, the identifier of the terminal device may be a cell radio network temporary identifier (cell radio network temporary identifier, C-RNTI). When the terminal device is in a non-RRC connected state, the identifier of the terminal device may be an identifier of a terminal device from a core network. Optionally, the identifier of the terminal device from the core network may be a system architecture evolution temporary mobile station identifier (system architecture evolution temporary mobile station identifier, S-TMSI).

S240: The access network device sends a contention resolution message to the terminal device.

When the contention resolution of the terminal device succeeds, the access network device sends the contention resolution message, also referred to as a message 4 (message 4, Msg4), to the terminal device. Optionally, contention resolution information may be a contention resolution identity MAC control element (contention resolution identity MAC CE) of the terminal device, that is, a part or all of content of the Msg3. Alternatively, the contention resolution information may be a PDCCH scrambled by using a cell radio network temporary identifier (cell radio network temporary identifier, C-RNTI). In other words, when detecting the PDCCH scrambled by using the C-RNTI, the terminal device considers that the contention is resolved. Correspondingly, the terminal device waits for receiving the Msg4 within a contention resolution timer. If the contention resolution timer expires and the terminal device receives no contention resolution information, it returns to S210 to perform the contention-based four-step random access again.

It should be noted that FIG. 2 in this application is merely a schematic flowchart provided for ease of describing the four-step random access procedure, and does not constitute any limitation on the protection scope of this application. For detailed descriptions of the four-step random access procedure, refer to descriptions in conventional technologies. In addition, the four-step random access merely represents a name of a random access manner, and a specific name of the four-step random access does not constitute a limitation on the scope of embodiments of this application.

FIG. 3 is a schematic flowchart of a two-step random access procedure. The two-step random access procedure may include the following steps.

S310: A terminal device sends a message A (message A, MsgA) to an access network device.

The MsgA message includes a preamble part and a physical uplink shared channel (physical uplink shared channel, PUSCH) part. The preamble part is sent on a PRACH resource (for example, the RO described above), and a PUSCH resource may carry L2 or L3 information, for example, a BFR MAC CE or an RRC connection setup request message.

S320: The access network device sends a message B (message B, MsgB) to the terminal device.

After receiving the MsgA message sent by the terminal device, the access network device sends the MsgB message to the terminal device based on the MsgA message. For example, the MsgB message may include a success RAR (success RAR) or a fallback RAR (fallback RAR).

When receiving the fallback RAR, the terminal device needs to fall back to a four-step random access procedure, in other words, send an Msg3.

In addition to the foregoing fallback process from the two-step random access to the four-step random access, if the access network device chooses to perform the two-step random access procedure when triggering random access, after a quantity of times for sending a preamble in the two-step random access procedure reaches a maximum quantity of sending times, the terminal device may fall back (fall back) to the four-step random access procedure to attempt to perform access. Therefore, an access success rate of the terminal device may be increased.

In the conventional technologies, air interface encryption is started only after identity authentication on the terminal device and a network device succeeds. However, a random access procedure is performed before a security authentication process, and all messages in the random access procedure are plaintexts. Consequently, the messages before security authentication of the terminal device are easily eavesdropped by an attacker. Some information elements in the messages may not change after a security mode is established. After the information elements are obtained by the attacker, subsequent messages such as a MAC CE and downlink control information (downlink control information, DCI) are easily eavesdropped by the attacker. For example, the attacker monitors an Msg4 message, so that the attacker can use a base station as an intermediary to transmit or receive data. In view of this, this application provides an encryption data transmission method. The method may be applied to message encryption in a random access procedure of a terminal device, to avoid information leakage to any malicious third party in the random access procedure, and improve network security performance.

It should be understood that an authentication method provided in embodiments of this application may be applied to various communication systems, for example, the communication system shown in FIG. 1.

A specific structure of an execution body of the method provided in embodiments of this application is not specifically limited in the following embodiments, provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

For ease of understanding embodiments of this application, the following descriptions are provided.

First, in this application, "indicate" may be understood as "enable", and "enable" may include "directly enable" and "indirectly enable". When a piece of information is described to enable A, it may indicate that the information directly enables A or indirectly enables A, but it does not indicate that A is definitely carried in the information.

Information enabled by the information is referred to as to-be-enabled information. In a specific implementation process, the to-be-enabled information is enabled in many manners. For example, but not limited to, the to-be-enabled information may be directly enabled, such as the to-be-enabled information and an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and another part of the to-be-enabled information is known or pre-agreed on. For example, specific information may alternatively be enabled in an arrangement sequence of all pieces of information that is pre-agreed on (for example, specified in a protocol), to reduce enabling overheads to some extent. In addition, a common part of all pieces of information may be further identified and enabled in a unified manner, to reduce enabling overheads caused by separately enabling same information.

Second, terms "first", "second", and various numerical numbers (for example, "#1" and "#2") shown in this application are merely for ease of description, and are used to distinguish between objects, but are not intended to limit the scope of embodiments of this application, for example, are used to distinguish between different information. It is not used to describe a specific order or sequence. It should be understood that the objects described in such a way are interchangeable in a proper circumstance, so that a solution other than embodiments of this application can be described.

Third, in this application, "preset" may include "predefined", for example, defined in a protocol. "Predefined" may be implemented by prestoring corresponding code or a corresponding table in a device (for example, including a terminal device or a network device), or in another manner that may indicate related information. A specific implementation thereof is not limited in this application.

Fourth, "stored" in embodiments of this application may be "stored in one or more memories". The one or more memories may be separately disposed, or may be integrated into a coder, a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Fifth, a "protocol" in embodiments of this application may be a standard protocol in the communication field, for example, may include a 5G protocol, a new radio (new radio, NR) protocol, and a related protocol used for a future communication system. This is not limited in this application.

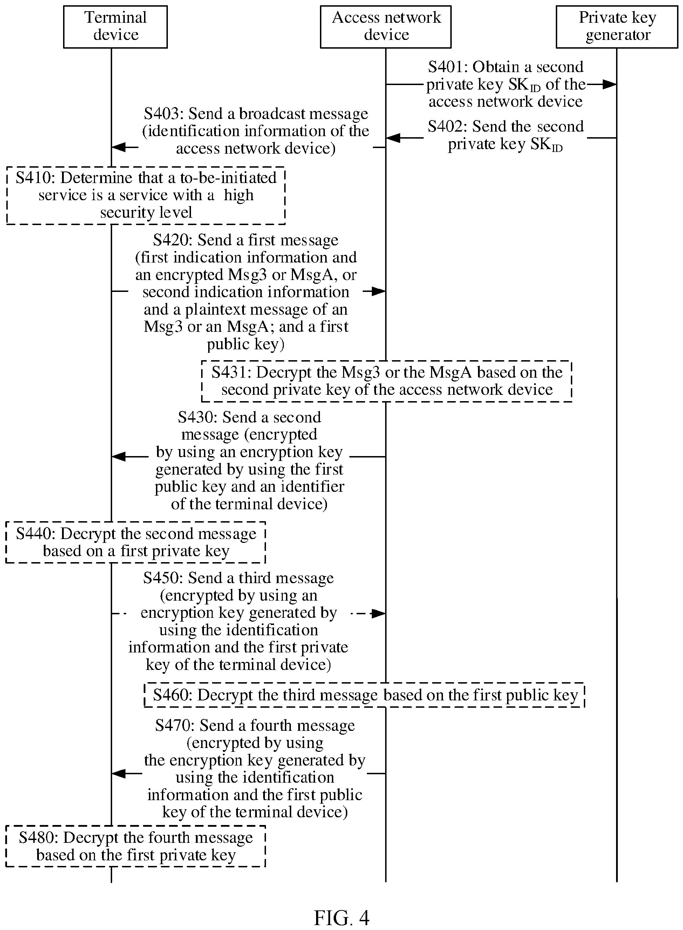

Without loss of generality, the following uses interaction between a terminal device and a network device as an example to describe in detail a method for processing data that is in a random access procedure provided in embodiments of this application. FIG. 4 shows a method for processing data that is in a random access procedure according to this application. The method includes the following several steps.

S401: An access network device obtains a second private key SK_{ID}.

The access network device may obtain the second private key from a trusted third-party private key generator PKG. The second private key is a private key of the access network device. For example, the access network device may send a private key request message to the PKG. The private key request message may carry identification information of the access network device (gNB ID), and the private key request message is used to request the PKG to generate the second private key and send the second private key, or the private key request message is used to request the PKG to send the second private key.

For example, the identification information of the access network device may be represented by any one of an identifier ID of a public land mobile network (public land mobile network, PLMN) to which the access network device belongs, a global unique identifier (gNB global unique ID) of the access network device, a tracking area code (tracking area code, TAC) of the access network device, or the like.

Correspondingly, S402: The PKG determines, based on the gNB ID and a global secret key GSK, a gNB ID-based SK_{ID}, and returns the gNB ID-based SK_{ID} to the gNB.

The GSK is generated by the PKG, and the PKG generates a global public key GPK. For a related process of generating the GSK and the GPK by the PKG, refer to conventional technologies. The GSK and the GPK may also be respectively referred to as an operator private key and an operator public key. For details of determining the SK_{ID} by the PKG based on the gNB ID and the global secret key GSK, refer to the conventional technologies.

S403: The access network device sends a broadcast message to a terminal device.

The broadcast message includes the identification information of the access network device, namely, the gNB ID. The identification information of the access network device is used by the terminal device to determine a second public key. In other words, the second public key is generated by using the identification information of the access network device and the global public key. The second public key and the second private key form a second public-private key pair of the access network device. Either the second public key or the second private key may be used to encrypt a message transmitted or received between the terminal device and the access network device, and the other key may be used to decrypt the encrypted message.

Similar to S201, the broadcast message may further include a synchronization signal, system information, and/or random access configuration information.

Optionally, the method may include the following step. S410: The terminal device determines type information of a to-be-initiated service. A type of the service includes a security level of the service. For example, the to-be-initiated service of the terminal device may be a service with a low security level or a service with a high security level.

For example, if a random access procedure of the terminal device is triggered by an initial access registration procedure, the type information of the to-be-initiated service may be indicated, in the registration procedure, to the terminal device by using a non-access stratum (non-access stratum, NAS) message sent by a core network device. For example, the terminal device may send a register request (register request) message to an AMF network element, the AMF network element indicates, by using a register accept (register Accept) message, that a type of service is the service with the high security level or the service with the low security level. If the random access procedure is triggered by a calling procedure of the terminal device, similarly, the terminal device may determine, by using indication information sent by a core network device, the type information of the to-be-initiated service. Alternatively, in a called procedure of the terminal device, a core network indicates the type information of the to-be-initiated service in a paging message.

Optionally, the terminal device may determine a to-be-executed random access procedure based on the determined type information of the to-be-initiated service. If determining that the to-be-initiated service is the service with the high security level, the terminal device performs the random access procedure according to the method provided in this embodiment of this application. If determining that the to-be-initiated service is the service with the low security level, the terminal device may perform an existing random access procedure.

S420: The terminal device sends a first message to the access network device, and correspondingly, the access network device receives the first message.

The first message may include an Msg3 in the foregoing four-step random access procedure, for example, an RRC setup request (RRCSetupRequest) message. As described above, the Msg3 carries identification information of the terminal device, or an identifier of the terminal device received by the terminal device from the core network. Optionally, the identifier of the terminal device from the core network may be an S-TMSI.

In a possible case, the GPK generated by the PKG is preset in the terminal device. In other words, the operator public key is preset. The first message may further include first indication information. The first indication information indicates that the Msg3 includes encrypted information. The encrypted information may be encrypted information of a part or all of information in the Msg. For example, the encrypted information includes encrypted information of the identifier of the terminal device. The Msg3 further includes a first public key of the terminal device. The first public key may be encrypted information. The first public key of the terminal device is used by the access network device to encrypt a message transmitted or received in the subsequent random access procedure. For example, the first public key is used by the access network device to encrypt an Msg4 sent to the terminal device.

A key used by the terminal device to encrypt the Msg3 may be generated by using the gNB ID and the preset GPK. The terminal device and the access network device may agree on the encryption key and a decryption key of the Msg3 by using a protocol.

The first public key and a first private key form a first public-private key pair of the terminal device, and the first private key is stored by the terminal device to decrypt information encrypted by using the first public key. The first public-private key pair may be generated by the third-party private key generator and preset in the terminal device, or may be dynamically generated by the terminal device. For example, the terminal device may preset a supported public key cryptographic algorithm, for example, an elliptic curve digital signature algorithm (Elliptic Curve Digital Signature Algorithm, "ECDSA" for short), or a Ron Rivest, Adi Shamir, Leonard Adleman (Ron Rivest, Adi Shamir, Leonard Adleman, "RSA" for short) public key encryption algorithm. The terminal device generates the first public-private key pair based on the preset public key cryptographic algorithm.

In another possible case, the first message includes second indication information. The second indication information indicates that the first message is not encrypted. In other words, the first message further includes a plaintext message of the Msg3. The first message further carries a first public key of the terminal device. The first public key of the terminal device is used by the access network device to encrypt a message transmitted or received in the subsequent random access procedure.

It should be noted that if the first message includes the Msg3 in the four-step random access procedure, before the terminal device sends the first message to the access network device, the method may further include the following steps. S404: The terminal device sends an Msg1 in the four-step random access procedure to the access network device. S405: The terminal device receives an Msg2 sent by the access network device. For detailed processes, respectively refer to S210 and S220. Alternatively, in S410, if determining that the to-be-initiated service is the service with the high security level, the terminal device may choose to send a preamble in a group B.

Alternatively, the first message may include an MsgA in the foregoing two-step random access procedure. When the GPK generated by the PKG is preset in the terminal device, in other words, the operator public key is preset, the first message may further include first indication information, and the first indication information indicates that the Msg3 is encrypted information. The first message further includes a first public key of the terminal device. The first public key of the terminal device is used by the access network device to encrypt a message transmitted or received in the subsequent random access procedure. For example, the first public key is used by the access network device to encrypt an MsgB sent to the terminal device.

A key used by the terminal device to encrypt the MsgA may be generated by using the gNB ID and the preset GPK. The terminal device and the access network device may agree on the encryption key and a decryption key of the Msg3 by using a protocol.

The first public key and a first private key form a first public-private key pair of the terminal device, and the first private key is stored by the terminal device to decrypt information encrypted by using the first public key. A manner of generating the first public-private key pair is described above.

In another possible case, the first message includes second indication information. The second indication information indicates that the first message is not encrypted. In other words, the first message further includes a plaintext message of the MsgA. The first message further carries a first public key of the terminal device. The first public key of the terminal device is used by the access network device to encrypt a message transmitted or received in the subsequent random access procedure.

S430: The access network device sends a second message to the terminal device, and correspondingly, the terminal device receives the second message.

The second message may include the Msg4 in the foregoing four-step random procedure or the MsgB. For different content included in the first message received by the access network device, there are two cases in which the access network device sends the second message.

Case 1: If the first message received by the access network device includes the first indication information, before the access network device sends the second message, the method may further include the following step. S431: The access network device decrypts the Msg3 or the MsgA based on the second private key of the access network device, namely, the SK_{ID}. The access network device obtains the identification information and the first public key of the terminal device based on the first message. The access network device encrypts the Msg4 or the MsgB based on the identification information and the first public key of the terminal device. For example, the access network device may generate a third public key based on the identification information of the terminal device and the second public key. The access network device encrypts the Msg4 or the MsgB by using the third public key. The access network device sends the second message to the terminal device. It may be understood that the second message includes a ciphertext of the Msg4 or the MsgB.

Case 2: If the first message received by the access network device includes the second indication information, the access network device obtains the identification information and the first public key of the terminal device based on the first message. The access network device encrypts the second message based on the identification information and the first public key of the terminal device. The access network device sends the second message to the terminal device.

S440: The terminal device decrypts the second message based on the first private key.

The first private key of the terminal device may be a private key in the preset first private key pair (key pair) of the terminal device. The key pair of the terminal device may be generated by the PKG, or may be dynamically generated by the terminal device.

Optionally, the method may further include the following steps. S450: The terminal device sends a third message to the access network device. The third message may be an RRC setup complete (RRCSetupComplete) message. Correspondingly, the access network device receives the third message.

The terminal device may encrypt the third message, and an encryption key used by the terminal device is generated by using the identification information and the first private key of the terminal device. Correspondingly, S460: After receiving the third message, the access network device may decrypt the third message based on the first public key of the terminal device received in S420.

Alternatively, the third message may be any message sent by the terminal device to the access network device after an RRC setup complete message and before security authentication on the terminal device is completed (AS security complete). Both the terminal device and the access network device may use the foregoing asymmetric encryption algorithm. To be specific, the encryption key used by the terminal device is generated by using the identification information and the first private key of the terminal device. Correspondingly, the access network device decrypts, by using the first public key of the terminal device, the message sent by the terminal device.

Optionally, the method may further include the following step. S470: The access network device sends a fourth message to the terminal device, and correspondingly, the terminal device receives the fourth message.

The fourth message may be any message sent by the access network device to the terminal device after an RRC setup complete message and before the security authentication on the terminal device is completed (AS security complete). The access network device encrypts, by using the identification information and the first public key of the terminal device, the message sent to the terminal device. Correspondingly, the terminal device decrypts, by using the first private key, the message sent by the access network device. Therefore, security of the message before the security authentication can be ensured.

It should be understood that sequence numbers of the foregoing processes do not mean execution sequences. The execution sequences of the processes should be determined based on functions and internal logic of the processes, and should not constitute any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, a method implemented by a communication device may be alternatively implemented by a part (for example, a chip or a circuit) that can be disposed in a communication device.

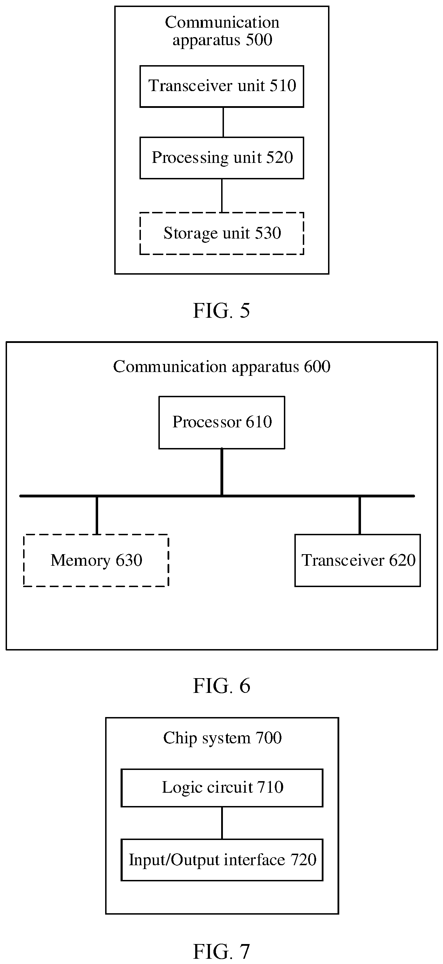

The foregoing describes in detail the communication method provided in embodiments of this application with reference to FIG. 4. The following describes in detail a communication apparatus provided in embodiments of this application with reference to FIG. 5 to FIG. 7. It should be understood that descriptions of apparatus embodiments correspond to the descriptions of the method embodiments. Therefore, for content that is not described in detail, refer to the foregoing method embodiments. For brevity, some content is not described again.

FIG. 5 is a block diagram of a communication apparatus 500 according to an embodiment of this application. As shown in the figure, the communication apparatus 500 may include a transceiver unit 510 and a processing unit 520.

In a possible design, the communication apparatus 1000 may be the terminal device in the foregoing method embodiments, or may be a chip configured to implement functions of the terminal device in the foregoing method embodiments.

It should be understood that the communication apparatus 500 may correspond to the terminal device in the method 400 according to embodiments of this application. The communication apparatus 500 may include units configured to perform the method performed by the terminal device in the method 400 in FIG. 4. In addition, the units in the communication apparatus 500 and the foregoing other operations and/or functions are separately used to implement corresponding procedures of the method 400 in FIG. 4. It should be understood that a detailed process in which the units perform the foregoing corresponding steps is described in detail in the foregoing method embodiments. For brevity, details are not described herein again.

In another possible design, the communication apparatus 500 may be the access network device in the foregoing method embodiments. The communication apparatus includes a transceiver unit 510 and a processing unit 520. Alternatively, the communication apparatus 500 may be a chip configured to implement functions of the access network device in the foregoing method embodiments.

It should be understood that the communication apparatus 500 may correspond to the access network device in the method 400 according to embodiments of this application. The communication apparatus 500 may include units configured to perform the method performed by the access network device in the method in FIG. 4. In addition, the units in the communication apparatus 500 and the foregoing other operations and/or functions implement corresponding procedures of the method in FIG. 4. It should be understood that a detailed process in which the units perform the foregoing corresponding steps is described in detail in the foregoing method embodiments. For brevity, details are not described herein again.

In another possible design, the communication apparatus 500 may be the access and mobility management function network element in the foregoing method embodiments, or may be a chip configured to implement functions of the access and mobility management function network element in the foregoing method embodiments.

It should be understood that the communication apparatus 500 may correspond to the access and mobility management function network element in the method 400 according to embodiments of this application. The communication apparatus 500 may include units configured to perform the method performed by the access and mobility management function network element. In addition, the units in the communication apparatus 500 and the foregoing other operations and/or functions are separately used to implement corresponding procedures of the method in FIG. 4. It should be understood that a detailed process in which the units perform the foregoing corresponding steps is described in detail in the foregoing method embodiments. For brevity, details are not described herein again.

It should be further understood that the transceiver unit 510 in the communication apparatus 500 may correspond to a transceiver 620 in a communication device 600 shown in FIG. 6. The processing unit 520 in the communication apparatus 500 may correspond to a processor 610 in the communication device 600 shown in FIG. 6.

It should be further understood that when the communication apparatus 500 is a chip, the chip includes a transceiver unit. For example, the chip may further include a processing unit. The transceiver unit may be an input/output circuit or a communication interface. The processing unit may be a processor, a microprocessor, or an integrated circuit integrated on the chip.

The transceiver unit 510 is configured to implement signal receiving and sending operations of the communication apparatus 500, and the processing unit 520 is configured to implement signal processing operations of the communication apparatus 500.

For example, the communication apparatus 500 further includes a storage unit 530. The storage unit 530 may be configured to store a public-private key pair.

FIG. 6 is a block diagram of a communication device 600 according to an embodiment of this application. As shown in FIG. 6, the communication device 600 includes at least one processor 610 and a communication interface 620. The processor 610 is coupled to a memory, and is configured to execute instructions stored in the memory, to control the communication interface 620 to send and/or receive a signal. For example, the communication device 600 further includes a memory 630. The memory 630 may be configured to store instructions, and may be configured to store a public-private key pair.

It should be understood that the processor 610 and the memory 630 may be combined into one processing apparatus, and the processor 610 is configured to execute program code stored in the memory 630 to implement the foregoing functions. During specific implementation, the memory 630 may alternatively be integrated into the processor 610, or may be independent of the processor 610.

It should be further understood that, in a possible design, the communication interface 620 may include a receiver (or referred to as a receiving machine) and a transmitter (or referred to as a transmitting machine). The communication interface 620 may further include an antenna. There may be one or more antennas. Alternatively, the communication interface 620 may be an interface circuit.

When the communication device 600 is a chip, the chip includes a transceiver unit and a processing unit. The transceiver unit may be an input/output circuit or a communication interface. The processing unit may be a processor, a microprocessor, or an integrated circuit integrated on the chip.

FIG. 7 is a diagram of a chip system according to an embodiment of this application. The chip system herein may alternatively be a system including circuits. The chip system 700 shown in FIG. 7 includes a logic circuit 710 and an input/output interface (input/output interface) 720. The logic circuit is configured to be coupled to the input interface, and transmit or receive data (for example, first indication information) by using the input/output interface, to perform the method shown in FIG. 4.

An embodiment of this application further provides a processing apparatus. The processing apparatus includes a processor and an interface. The processor may be configured to perform the method in the foregoing method embodiments.

It should be understood that the foregoing processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing method may be implemented by using a hardware integrated logic circuit in the processor, or by using instructions in a form of software. The steps in the method provided with reference to embodiments of this application may be directly executed and accomplished by a hardware processor, or may be executed and accomplished by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with hardware of the processor. To avoid repetition, details are not described herein again.

It should be noted that the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the method, steps, and logical block diagrams disclosed in embodiments of this application. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

According to the method provided in embodiments of this application, this application further provides a computer program product. The computer program product includes computer program code. When the computer program code is run on a computer, the computer is enabled to perform the method in the embodiment shown in FIG. 4.

According to the method provided in embodiments of this application, this application further provides a computer-readable medium. The computer-readable medium stores program code. When the program code is run on a computer, the computer is enabled to perform the method in the embodiment shown in FIG. 4.

A person of ordinary skill in the art may be aware that, units and algorithm steps of examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform a part or all of the steps in the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for processing data that is in a random access procedure, comprising:
sending, by a first communication apparatus, a first message, wherein the first message comprises a first public key of the first communication apparatus, and the first public key is used to encrypt a second message that is sent to the first communication apparatus and that is in the random access procedure;
receiving, by the first communication apparatus, the second message; and
decrypting, by the first communication apparatus, the second message by using a first private key, wherein
the first public key and the first private key are a public key and a private key in a first public-private key pair of the first communication apparatus, and the first private key is stored in the first communication apparatus.

2. The method according to claim 1, wherein the first message further comprises third information and first indication information that are in the random access procedure of the first communication apparatus, and the first indication information indicates that the third information comprises encrypted information; and before the sending, by a first communication apparatus, a first message, the method further comprises:
encrypting, by the first communication apparatus, a part or all of the third information by using a second public key, wherein the second public key is generated by using an identifier of an access network device and a global public key, wherein
the identifier of the access network device is from a broadcast message sent by the access network device, the global public key is a public key in a second public-private key pair determined by a third-party private key generator, the second public-private key pair further comprises a second private key, and the second private key is stored in the access network device to decrypt the encrypted information in the third information.

3. The method according to claim 1, wherein the first message further comprises third information and second indication information that are in the random access procedure of the first communication apparatus, and the second indication information indicates that the third information is plaintext information.

4. The method according to any one of claims 1 to 3, wherein the first public-private key pair is preset in a universal subscriber identity module USIM of the first communication apparatus, or the first public-private key pair is generated by the first communication apparatus.

5. The method according to any one of claims 1 to 4, wherein the method further comprises:
sending, by the first communication apparatus, a third message, wherein the third message is any message sent by the first communication apparatus before security authentication on the first communication apparatus is completed, and the third message is encrypted by using an encryption key generated by using identification information and the first private key of the first communication apparatus;
receiving, by the first communication apparatus, a fourth message, wherein the fourth message is any message sent by the access network device before the security authentication on the first communication apparatus is completed, and the fourth message is encrypted by using an encryption key generated by using the identification information and the first public key of the first communication apparatus; and
decrypting, by the first communication apparatus, the fourth message based on the first private key.

6. The method according to any one of claims 1 to 5, wherein before the sending, by a first communication apparatus, a first message, the method further comprises:
receiving, by the first communication apparatus, third indication information sent by a core network device, wherein the third indication information indicates a security level of a service of the first communication apparatus, and the security level comprises a high security level; and
initiating, by the first communication apparatus, a service with the high security level to trigger the random access procedure.

7. The method according to any one of claims 1 to 6, wherein the first communication apparatus is a terminal device or a chip.

8. A method for processing data that is in a random access procedure, comprising:
receiving, by a second communication apparatus, a first message, wherein the first message comprises a first public key of a terminal device; and
sending, by the second communication apparatus, a second message in the random access procedure of the terminal device, wherein the second message is encrypted by using the first public key, wherein
the first public key is a public key in a first public-private key pair of the terminal device, the first public-private key pair further comprises a first private key, and the first private key is stored in the terminal device to decrypt the second message.

9. The method according to claim 8, wherein the first message further comprises third information and first indication information that are in the random access procedure of the terminal device, and the first indication information indicates that the third information comprises encrypted information; and after the receiving, by a second communication apparatus, a first message, the method further comprises:
determining, by the second communication apparatus, based on the first indication information, that the third information comprises the encrypted information; and
decrypting, by the second communication apparatus, the encrypted information in the third information by using a second private key, wherein the second private key is a private key in a second public-private key pair determined by a third-party private key generator, the second public-private key pair further comprises a second public key, the second public key is preset in the terminal device, and the second public key is used by the terminal device to encrypt a part or all of the third information.

10. The method according to claim 8, wherein the first message further comprises third information and second indication information that are in the random access procedure of the terminal device, and the second indication information indicates that the third information is plaintext information.

11. The method according to any one of claims 8 to 10, wherein the first public-private key pair is preset in a universal subscriber identity module USIM of the terminal device, or the first public-private key pair is generated by the terminal device.

12. The method according to any one of claims 8 to 11, wherein the method further comprises:
receiving, by the second communication apparatus, a third message, wherein the third message is any message sent by the terminal device before security authentication on the terminal device is completed, and the third message is encrypted by using an encryption key generated by using identification information and the first private key of the terminal device;
decrypting, by the second communication apparatus, the third message based on the first public key; and
sending, by the second communication apparatus, a fourth message, wherein the fourth message is any message sent by the second communication apparatus before the security authentication on the terminal device is completed, and the fourth message is encrypted by using an encryption key generated by using the identification information and the first public key of the terminal device.

13. The method according to any one of claims 8 to 12, wherein the second communication apparatus is an access network device or a chip.

14. An apparatus for processing data that is in a random access procedure, comprising:
a transceiver unit, configured to send a first message, wherein the first message comprises a first public key of the apparatus, and the first public key is used by an access network device to encrypt a second message that is sent to the apparatus and that is in the random access procedure, wherein
the transceiver unit is further configured to receive the second message; and
a processing unit, configured to decrypt the second message by using a first private key, wherein
the first public key and the first private key are a public key and a private key in a first public-private key pair of the apparatus, and the first private key is stored in the apparatus.

15. The apparatus according to claim 14, wherein the first message further comprises third information and first indication information that are in the random access procedure of the apparatus, and the first indication information indicates that the third information comprises encrypted information; and the processing unit is further configured to:
encrypt a part or all of the third information by using a second public key, wherein the second public key is generated by using an identifier of the access network device and a global public key, wherein
the identifier of the access network device is from a broadcast message sent by the access network device, the global public key is a public key in a second public-private key pair determined by a third-party private key generator, the second public-private key pair further comprises a second private key, and the second private key is stored in the access network device to decrypt the encrypted information in the third information.

16. The apparatus according to claim 14, wherein the first message further comprises third information and second indication information that are in the random access procedure of the apparatus, and the second indication information indicates that the third information is plaintext information.

17. The apparatus according to any one of claims 14 to 16, wherein the first public-private key pair is preset in a universal subscriber identity module USIM of the apparatus, or the first public-private key pair is generated by the processing unit.

18. The apparatus according to any one of claims 14 to 17, wherein
the transceiver unit is further configured to send a third message, wherein the third message is any message sent by the apparatus before security authentication on the apparatus is completed, and the third message is encrypted by using an encryption key generated by using identification information and the first private key of the apparatus;
the transceiver unit is further configured to receive a fourth message, wherein the fourth message is any message sent by the access network device before the security authentication on the apparatus is completed, and the fourth message is encrypted by using an encryption key generated by using the identification information and the first public key of the apparatus; and
the processing unit is further configured to decrypt the fourth message based on the first private key.

19. The apparatus according to any one of claims 14 to 18, wherein the transceiver unit is further configured to:
receive third indication information sent by a core network device, wherein the third indication information indicates a security level of a service of the apparatus, and the security level comprises a high security level, wherein
the apparatus initiates a service with the high security level to trigger the random access procedure.

20. An apparatus for processing data that is in a random access procedure, comprising:
a transceiver unit, configured to receive a first message, wherein the first message comprises a first public key of a terminal device, wherein
the transceiver unit is further configured to send a second message in the random access procedure of the terminal device, wherein the second message is encrypted by using the first public key, wherein
the first public key is a public key in a first public-private key pair of the terminal device, the first public-private key pair further comprises a first private key, and the first private key is stored in the terminal device to decrypt the second message.

21. The apparatus according to claim 20, wherein the first message further comprises third information and first indication information that are in the random access procedure of the terminal device, and the first indication information indicates that the third information comprises encrypted information; and the apparatus further comprises a processing unit, wherein
the processing unit is configured to determine, based on the first indication information, that the third information comprises the encrypted information; and
the processing unit is further configured to decrypt the third information by using a second private key, wherein the second private key is a private key in a second public-private key pair determined by a third-party private key generator, the second public-private key pair further comprises a second public key, the second public key is preset in the terminal device, and the second public key is used by the terminal device to encrypt a part or all of the third information.

22. The apparatus according to claim 20, wherein the first message further comprises third information and second indication information that are in the random access procedure of the terminal device, and the second indication information indicates that the third information is plaintext information.

23. The apparatus according to any one of claims 20 to 22, wherein the first public-private key pair is preset in a universal subscriber identity module USIM of the terminal device, or the first public-private key pair is generated by the terminal device.

24. The apparatus according to any one of claims 20 to 23, wherein
the transceiver unit is further configured to receive a third message, wherein the third message is any message sent by the terminal device before security authentication on the terminal device is completed, and the third message is encrypted by using an encryption key generated by using identification information and the first private key of the terminal device;
the processing unit is further configured to decrypt the third message based on the first public key; and
the transceiver unit is further configured to send a fourth message, wherein the fourth message is any message sent by the apparatus before the security authentication on the terminal device is completed, and the fourth message is encrypted by using an encryption key generated by using the identification information and the first public key of the terminal device.

25. A communication apparatus, comprising:
a memory, configured to store a computer program; and
a processor, wherein the processor is coupled to the memory, and the processor is configured to execute the computer program stored in the memory, to enable the communication apparatus to perform the method according to any one of claims 1 to 7 or perform the method according to any one of claims 8 to 13.

26. A computer-readable storage medium, wherein the computer-readable storage medium stores a computer program; and when the computer program is run by a communication apparatus, the apparatus is enabled to perform the method according to any one of claims 1 to 7 or perform the method according to any one of claims 8 to 13.

27. A chip system, comprising:
a processor, configured to invoke a computer program from a memory and run the computer program, to enable a communication apparatus on which the chip system is installed to perform the method according to any one of claims 1 to 7 or perform the method according to any one of claims 8 to 13.

28. A computer program product comprising instructions, wherein
when the computer program product runs on a computer, the computer is enabled to perform the method according to any one of claims 1 to 7 or perform the method according to any one of claims 8 to 13.

29. A communication system, comprising:
the communication apparatus according to any one of claims 14 to 19 and the communication apparatus according to any one of claims 20 to 24.
